Europäisches Patentamt

European Patent Office

Office européen des brevets

(19)

(11) Veröffentlichungsnummer: **0 170 881**
**B1**

(12) **EUROPÄISCHE PATENTSCHRIFT**

(45) Veröffentlichungstag der Patentschrift: **14.11.90**

(51) Int. Cl.⁵: **C 08 F 10/06, C 08 F 4/64**

(21) Anmeldenummer: **85108221.4**

(22) Anmeldetag: **03.07.85**

(54) **Verfahren zum Herstellen von Propylen-Homopolymerisaten.**

(30) Priorität: **11.07.84 DE 3425456**

(43) Veröffentlichungstag der Anmeldung:
**12.02.86 Patentblatt 86/07**

(45) Bekanntmachung des Hinweises auf die
Patenterteilung:
**14.11.90 Patentblatt 90/46**

(84) Benannte Vertragsstaaten:
**AT BE DE FR GB IT NL**

(56) Entgegenhaltungen:
**EP-A-0 038 478**
**DE-A-3 416 561**
**FR-A-2 256 928**
**FR-A-2 516 520**

**CHEMICAL ABSTRACTS, Band 92, Nr. 2, Januar
1980, Columbus, OH (US); S. 19, Nr. 7198d**

(73) Patentinhaber: **BASF Aktiengesellschaft
Carl-Bosch-Strasse 38
D-6700 Ludwigshafen (DE)**

(72) Erfinder: **Staiger, Gerhard, Dr.
Virchowstr. 26
D-6712 Bobenheim-Roxheim (DE)**
Erfinder: **Jaggard, James F.R., Dr.
Bordollo-Ring 21
D-6718 Gruenstadt (DE)**
Erfinder: **Gruber, Wolfgang, Dr.
Lorscher-Ring 2b
D-6710 Frankenthal (DE)**
Erfinder: **Werner, Rainer Alexander, Dr.
Berliner Str. 14
D-6702 Bad Duerkheim (DE)**

EP 0 170 881 B1

**Beschreibung**

Die vorliegende Erfindung betrifft ein Verfahren zum Herstellen von Propylen-Homopolymerisaten durch Polymerisation von Propylen mittels eines Ziegler-Natta-Katalysatorsystems bei Temperaturen von 40 bis 150°C und Drücken von 10 bis 50 bar in der Gasphase in einem zentrischen Rührbett aus kleinteiligem Polymerisat unter Abfuhr der Polymerisationswärme durch Verdampfungskühlung, wobie man das Propylen kontinuierlich oder taktweise in die Polymerisationszone einbringt und das Polymerisat kontinuierlich oder taktweise aus der Polymerisationszone austrägt, mit den Maßgaben, daß man (1) in der Polymerisationszone den Druck und die Temperatur in einem Bereich hält, der dem gasförmigen Zustand des Propylens entspricht, (b) gasförmiges, nicht durch Polymerisation verbrauchtes Propylen aus der Polymerisationszone austrägt, verflüssigt, speichert und flüssig in die Polymersationszone wieder einbringt, (c) die Temperatur in der Polymerisationszone regelt mittels fortlaufender Messung der Temperatur und einer dadurch bei Temperaturänderung ausgelösten Änderung der pro Zeiteinheit eingebrachten Menge an flüssigem, in der Reaktionszone verdampfenden Propylen, (d) das durch Polymerisation verbrauchte Propylen durch Zufuhr von Frisch-Propylen ersetzt, und (e) ein Ziegler-Natta-Katalysatorsystem verwendet, das auf 100 Molteile — gerechnet als Titan — einer Titan enthaltenden Katalysatorkomponente (1) 200 bis 1500, insbesondere 250 bis 900 Molteile — gerechnet als Aluminium — einer Aluminium enthaltenden Katalysatorkomponente (2) aufweist, wobei

(1) die Titan enthaltende Katalysatorkomponente eine Komplexverbindung ist, die aus (1.1) 100 Molteilen eines Stoffes der Formel $TiCl_3 \cdot 0,33$ $AlCl_3$ und (1.2) 5 bis 50, insbesondere 20 bis 40 Molteilen eines Stoffes der Formel $R3PO_n$ — worin stehen R für eine n-Butyl-, i-Butyl- oder Phenylgruppe und n für die Zahl 0 oder 1 — durch trockens Vermahlen ohne Hilfs- bzw. Zusatzstoffe erhalten worden ist, und

(2) die Aluminium enthaltende Katalysatorkomponente Triethylaluminium ist.

Verfahren dieser Art werden in der Technik mit Erfolg durchgeführt. Sie können verstanden werden als eine Kombination einer spezifischen Verfahrenweise — wie sie z.B. aus den US—PS4 012 573 und US—PS4 330 645 bekanntgeworden ist — mit einem speziell ausgewählten Ziegler-Natta-Katalysatorsystem — wie es z.B. aus den 3 937 691 und US—PS3 937 977 bekannt geworden ist.

Die dabei als Verfahrensprodukt erhaltenen Polymerisate eignen sich u.a. besonders zum Herstellen von Folien; diese weisen bemerkenswert gute physikalische Eigenschaften auf. Ein gewisser Nachteil der Folien ist jedoch noch darin zu sehen, daß sie zwar klar sind, aber im Laufe der Zeit etwas eintrüben und daß ihre Durchstoßfestigkeit zwar befriedigend ist, aber hochgeschraubten Anforderungen nicht immer genügt.

Hier setzt die Aufgabe an, die zur vorliegenden Erfindung geführt hat: Ein Verfahren der eingangs definierten Art aufzuzeigen, das Polymerisate zu liefern vermag, aus welchem Folien hergestellt werden können, die im Laufe der Zeit nicht oder kaum eintrüben und/oder deren Durchstoßfestigkeit auch erhöhten Anforderungen genügt.

Es wurde gefunden, daß diese Aufgabe gelöst werden kann, wenn man im Rahmen des in Rede stehenden Verfahrens ein Ziegler-Natta-Katalysatorsystem verwendet, das neben der Titan enthaltenden Katalysatorkomponente (1) und der Aluminium enthaltenden Katalysatorkomponente (2) als eine weitere Komponente (3) ein bestimmtes Alkoxisilan enthält.

Gegenstand der vorliegenden Erfindung ist dementsprechend ein Verfahren zum Herstellen von Propylen-Homopolymerisaten durch Polymerisation von Propylen mittels eines Ziegler-Natta-Katalysatorsystems bei Temperaturen von 40 bis 150°C und Drücken von 10 bis 50 bar in der Gasphase in einem zentrischen Rührbett aus kleinteiligem Polymerisat unter Abfuhr der Polymerisationswärme durch Verdampfungskühlung, wobei man das Propylen kontinuierlich oder taktweise in die Polymerisationszone einbringt und das Polymerisat kontinuierlich oder taktweise aus der Polymerisationszone austrägt, mit den Maßgaben, daß man (a) in der Polymerisationszone den Druck und die Temperatur in einem Bereich hält, der dem gasförmigen Zustand des Propylens entspricht, (b) gasförmiges, nicht durch Polymerisation verbrauchtes Propylen aus der Polymerisationszone austrägt, verflüssigt, speichert und flüssig in die Polymerisationszone wieder einbringt, (c) die Temperatur in der Polymerisationszone regelt mittels fortlaufender Messung der Temperatur und einer dadurch bei Temperaturänderung ausgelösten Änderung der pro Zeitenheit eingebrachten Menge an flüssigem, in der Reaktionszone verdampfenden Propylen, (d) das durch Polymerisation verbrauchte Propylen durch Zufuhr von Frisch-Propylen ersetzt, und (e) ein Ziegler-Natta-Katalysatorsystem verwendet, das auf 100 Molteile — gerechnet als Titan — einer Titan enthaltenden Katalysatorkomponente (1) 200 bis 1500, insbesondere 250 bis 900 Molteile — gerechnet als Aluminium — einer Aluminium enthaltenden Katalysatorkomponente (2) aufweist, wobei

(1) die Titan enthaltende Katalysatorkomponente eine Komplexverbindung ist, die aus (1.1.) 100 Molteilen eines Stoffes der Formel $TiCl_3 \cdot 0,33$ $AlCl_3$ und (1.2) 5 bis 50, insbesondere 20 bis 40 Molteilen eines Stoffes der Formel $R_3PO_n$ — worin stehen R für eine n-Butyl-, i-Butyl- oder Phenylgruppe und n für die Zahl 0 oder 1 — durch trockenes Vermahlen ohne Hilfs- bzw. Zusatzstoffe erhalten worden ist, und

(2) die Aluminium enthaltende Katalysatorkomponente Triethylaluminium ist.

Das erfindungsgemäße Verfahren ist dadurch gekennzeichnet, daß ein Ziegler-Natta-Katalysatorsystem eingesetzt wird, das auf 100 Molteile — gerechnet als Aluminium — der Aluminium enthaltenden Katalysatorkomponente (2) als eine weitere Komponente

(3) 3 bis 30, insbesondere 5 bis 15 Molteile eines Alkoxisilans der Formel $R^1OSiR^2R^3R^4$ — worin stehen $R^1$ für eine nicht mehr als 8, insbesondere nicht mehr als 4 Kohlenstoffatome aufweisende Alkylgruppe, $R^2$, $R^3$ und $R^4$ für gleiche oder verschiedene Reste $R^5$ oder $OR^5$, und $R^5$ für einen Rest $R^1$ oder die Phenylgruppe — enthält.

Zu dem erfindungsgemäßen Varfahren ist im einzelnen das folgende zu sagen:

A) Verfahrenstechnische Seite

Die verfahrenstechnische Seite ist die einschlägig übliche und als solche mit keinen Bedonderheiten verbunden. Anstelle näherer Ausführungen hierzu kann daher auf die aus der Literatur und Praxis bekannt gewordenen Arbeitsweisen verwiesen werden, insbesondere auf die Arbeitsweisen die in den — eingangs bereits zitierten — US—PS4 012 573 und 4 330 645 beschrieben sind. Diese Arbeitsweisen haben sich im gegebenen Zusammenhang als besonders geeignet erwiesen.

B) Stoffliche Seite

Das zu polymerisierende Propylen sollte — dies versteht sich von selbst — zweckmäßigerweise ein solches sein, wie es üblicherweise zur Polymerisation nach Ziegler-Natta eingesetzt wird. Dies bedeutet insbesondere, daß das Propylen frei von oder sehr arm an Stoffen sein sollte, die das Katalysatorsystem vergiften.

Unter dieser Voraussetzung fallen die Polymerisate nicht nur in relativ guter Ausbeute an, sondern auch in erwünscht kleinteiliger Form als feinerer oder größerer Grieß, wobei die Teilchengröße — nicht anders als bei den einschlägigen bekannten Verfahren — von den im einzelnen gewählten Verfahrensbedingungen abhängt. Es läßt sich somit sagen, daß der Teilchendurchmesser der Polymerisate im allgemeinen im Bereich von etwa 0,03 bis 10 und insbesondere etwa 0,1 bis 5 mm liegt.

Die Polymerisation selbst erfolgt mittels eines Ziegler-Natta-Katalysatorsystems aus

(1) einer Titan enthaltenden Katalysatorkomponente, welche eine Komplexverbindung ist, die aus (1.1) 100 Molteilen eines Stoffes der Formel $TiCl_3 \cdot 0,33 \ AlCl_3$ und (1.2) 5 bis 50, insbesondere 20 bis 40 Molteilen eines Stoffes der Formel $R_3PO_n$ — worin stehen R für eine n-Butyl-, i-Butyl- oder Phenylgruppe und n für die Zahl 0 oder 1 — durch trockenes Vermahlen ohne Hilfs- bzw. Zusatzstoffe erhalten worden ist.

(2) einer Aluminium enthaltenden Katalysatorkomponente, welche Triethylaluminium ist, sowie

(3) einer weiteren Katalysatorkomponente, welche — erfindungsgemäß — ein bestimmtes Alkoxisilan ist,

mit den Maßgaben, daß entfallen (i) auf 100 Molteile — gerechnet als Titan — der Titan enthaltenden Katalysatorkomponente (1) 200 bis 1500, insbesondere 250 bis 900 Molteile — gerechnet als Aluminium — der Aluminium enthaltenden Katalysatorkomponente (2), und (ii) auf 100 Molteile — gerechnet als Aluminium — der Aluminium enthaltenden Katalysatorkomponente (2) 3 bis 30, insbesondere 5 bis 15 Molteile des Alkoxisilans.

Zu den einzelnen Katalysatorkomponenten dieses Systems ist das Nachstehende zu sagen:

(1) Die Titan enthaltende Katalysatorkomponente kann eine — der für sie gegebenen Definition gehorchende — einschlägig übliche sein. Unter diesen haben sich die in den — eingangs bereits zitierten — US—PS3 937 691 und 3 977 997 beschriebenen Katalysatorkomponenten (1) im gegebenen Zusammenhang als besonders geeignet erwiesen; sie sollen daher über den Weg des Zitats zum Bestandteil der vorliegenden Erfindungs-Beschreibung gemacht werden.

Insoweit verbleibt nur noch zu sagen, daß im erfindungsgemäßen Rahmen besonders gut geeignete Stoffe der Formel $R_3PO_n$ Triphenylphosphin, Triphenylphosphinoxid, Tri-n-butylphosphin und Tri-n-butylphosphinoxid sind.

(2) Die Aluminium enthaltende Katalysatorkomponente ist Triethyaluminium; — so wie es bei der Homopolymerisation von Propylen üblich ist.

(3) Die weitere Katalysatorkomponente ist erfindungsgemäß ein Alkoxisilan mit der oben definierten Formel; sie ist vorzugsweise ein Trialkoxiphenylsilan oder Tetraalkoxisilan mit jeweils nicht mehr als vier Kohlenstoffatomen pro Alkoxigruppe, insbesondere das Triethoxiphenylsilan oder das Tetraethoxisilan. Neben den letztgennanten kommen beispielsweise auch die folgenden Trialkoxiphenylsilane in Betracht: Tri-n-propoxiphenylsilan sowie Tri-n-butoxiphenylsilan.

Das Alkoxisilan kann eingesetzt werden in Form eines Einzelindividuums oder in Form eines Gemisches aus zwei oder mehr Einzelindividuen.

Das Alkoxisilan verursacht — unter der Voraussetzung, daß es zusammen mit den oben dargelegten speziell ausgewählten spezifisch zuzuordnenden Katalysatorkomponenten (1) und (2) vorliegt — die erfindungsgemäß zu bewirkenden, eingangs diskutierten Verbesserungen der Eigenschaften der Polymerisate, — ein Vorgang, der nicht vorherzusehen war.

Der Vollständigkeit halber ist noch zu erwähnen, daß sich beim erfindungsgemäßen Verfahren die Molekulargewichte der Polymerisate durch die einschlägig üblichen Maßnahmen regeln lassen, z.B. mittels Reglern, wie insbesondere Wasserstoff.

Des weiteren ist noch festzuhalten, daß beim erfindungsgemäßen Verfahren die Komponenten des Katalysatorsystems in mannigfacher Weise in den Polymerisationsraum eingebracht werden können, z.B. (i) die Titankomponente (1), die Aluminiumkomponente (2) sowie das Alkoxisilan (3) alle örtlich gemeinsam, (ii) die gleichen drei Komponenten alle örtlich getrennt voneinander, (iii) die Titankomponente (1) einerseits und ein Gemisch aus (2) und (3) andererseits örtlich getrennt voneinander — was von besonderem Vorteil sein kann — oder (iiii) ein Gemisch aus der Titankomponente (1) und dem Alkoxisilan (3) einerseits und die Aluminiumkomponente (2) andererseits örtlich getrennt voneinander.

Beispiel 1

Herstellung der Titan enthaltenden Katalysatorkomponente (1)

Es wird ausgegangen von

(a) einem Stoff der Formel $TiCl_3 \cdot 0{,}33\ AlCl_3$ und
(b) Triphenylphosphinoxid

im Molverhältnis (a) : (b) von 100 : 25.

Die Vermahlung dieser Stoffe findet in einer Kugelschwingmühle statt, deren Mahlbeschleunigung 50 m . sec$^{-2}$ ist und deren Nutzvolumen 50 Liter beträgt.

Im einzelnen wird dabei so verfahren, daß man die Mühle zunächst mit 25 kg des Stoffes (a) beschickt, dann unter Mahlen bei einer Temperatur des Mahlguts von −20°C die dem angegebenen Molverhältnis entsprechende Menge des Stoffes (b) über eine Zeitspanne von 10 Stunden in kleinen Portionen zugibt (wobei sich der Stoff (b) homogen im Mahlgut verteilt), daraufhin unter Mahlen des Mahlgut innerhalb einer Zeitspanne von 2 Stunden auf eine Temperatur von 40°C bringt und über eine Zeitspanne von 30 Stunden auf dieser Temperatur hält.

Es resultiert als Titan enthaltende Katalysatorkomponente (1) eine Komplexverbindung aus (a) und (b), die wie unten beschrieben zur Polymerisation verwendet wird.

Polymerisation mittels der Titan enthaltenden Katalysatorkomponente (1)

Es wird gearbeitet wie in Beispiel 1 der US—PS4 330 645 mit den folgenden Abänderungen:

(i) Das eingesetzte Ziegler-Natta-Katalysatorsystem besteht aus

(1) der vorstehend beschriebenen Titan enthaltenden Katalysatorkomponente,

(2) Triethyaluminium als Aluminium enthaltender Katalysatorkomponente, sowie

(3) Triethoxiphenylsilan als weiterer Katalysatorkomponente.

(ii) Die Mengenverhältnisse im Katalysatorsystem werden so gewählt, daß entfallen auf 100 Molteile — gerechnet als Titan — der Titan enthaltenden Katalysatorkomponente (1) 700 Molteile — gerechnet als Aluminium — der Aluminium enthaltenden Katalysatorkomponente (2), und auf 100 Molteile — gerechnet als Aluminium — der Aluminium enthaltenden Katalysatorkomponente (2) 7 Molteile des Triethoxiphenylsilans.

Bei dieser Arbeitsweise entsteht ein Polymerisat, aus welchem Folien hergestellt werden können, die im Laufe der Zeit so gut wie nicht eintrüben und deren Durchstoßfestigkeit hohen Anforderungen genügt.

Beispiel 2

Es wird in völliger Analogie zu Beispiel 1 gearbeitet, jedoch wird als Katalysatorkomponente (3) nicht Triethoxiphenylsilan, sondern Tetraethoxisilan eingesetzt, und zwar in einer solchen Menge, daß auf 100 Molteile — gerechnet als Aluminium — der Aluminium enthaltenden Katalysatorkomponente (2) 5,6 Molteile des Tetraethoxisilans entfallen.

Auch bei dieser Arbeitsweise entsteht ein Polymerisat, aus welchem Folien hergestellt werden können, die im Laufe der Zeit so gut wie nicht eintrüben und deren Durchstoßfestigkeit hohen Anforderungen genügt.

**Patentanspruch**

Verfahren zum Herstellen von Propylen-Homopolymerisaten durch Polymerisation von Propylen mittels eines Ziegler-Natta-Katalysatorsystems bei Temperaturen von 40 bis 150°C und Drücken von 10 bis 50 bar in der Gasphase in einem zentrischen Rührbett aus kleinteiligem Polymerisat unter Abfuhr der Polymerisationswärme durch Verdampfungskühlung, wobei man das Propylen kontinuierlich oder taktweise in die Polymerisationszone einbringt und das Polymerisat kontinuierlich oder taktweise aus der Polymerisationszone austrägt, mit den Maßgaben, daß man (a) in der Polymerisationszone den Druck und die Temperatur in einem Bereich hält, der dem gasförmigen Zustand des Propylens entspricht, (b) gasförmiges, nicht durch Polymerisation verbrauchtes Propylen aus der Polymerisationszone austrägt, verflüssigt, speichert und flüssig in die Polymerisationszone wieder einbringt, (c) die Temperatur in der Polymerisationszone regelt mittels fortlaufender Messung der Temperatur und einer dadurch bei Temperaturänderung ausgelösten Änderung der pro Zeiteinheit eingebrachten Menge an flüssigem, in der Reaktionszone verdampfenden Propylen, (d) das durch Polymerisation verbrauchte Propylen durch Zufuhr von Frisch-Propylen ersetzt, und (e) ein Ziegler-Natta-Katalysatorsystem verwendet, das auf 100 Molteile — gerechnet als Titan — einer Titan enthaltenden Katalysatorkomponente (1) 200 bis 1500 Molteile — gerechnet als Aluminium — einer Aluminium enthaltenden Katalysatorkomponente (2) aufweist, wobei

(1) die Titan enthaltende Katalysatorkomponente eine Komplexverbindung ist, die aus (1.1) 100 Molteilen eines Stoffes der Formel $TiCl_3 \cdot 0{,}33\ AlCl_3$ und (1.2) 5 bis 50 Molteilen eines Stoffes der Formel $R_3PO_n$ — worin stehen R für eine n-Butyl-, i-Butyl- oder Phenylgruppe und n für die Zahl 0 oder 1 — durch trockenes Vermahlen ohne Hilfs- bzw. Zusatzstoffe erhalten worden ist, und

(2) die Aluminium enthaltende Katalysatorkomponente Triethylaluminium ist,

dadurch gekennzeichnet, daß ein Ziegler-Natta-Katalysatorsystem eingesetzt wird, das auf 100 Molteile — gerechnet als Aluminium — der Aluminium enthaltenden Katalysatorkomponente (2) als eine weitere Komponente

(3) 3 bis 30 Molteile eines Alkoxisilans der Formel $R^1OSiR^2R^3R^4$ — worin stehen $R^1$ für eine nicht mehr als 8 Kohlenstoffatome aufweisende Alkylgruppe, $R^2$, $R^3$ und $R^4$ für gleiche oder verschiedene Reste $R^5$ oder $OR^5$, und $R^5$ für einen Rest $R^1$ oder die Phenylgruppe — enthält.

**Revendication**

Procédé de préparation d'homopolymères du propylène par polymérisation de propylène au moyen d'un système catalytique de Ziegler-Natta à des températures de 40 à 150°C et sous des pressions de 10 à 50 bars, en phase gazeuse, dans un lit agité centré de polymère en fines particules, avec évacuation de la chaleur de polymérisation par refroidissement par évaporation, le propylène étant introduit de façon continue ou à intervalles réguliers dans la zone de polymérisation et le polymère étant extrait de façon continue ou à intervalles réguliers de la zone de polymérisation, étant spécifié (a) que dans la zone de polymérisation, on maintient la pression et la température dans une gamme qui correspond à l'état gazeux de propylène, (b) qu'on extrait de la zone de polymérisation le propylène gazeux qui n'a pas été consommé par polymérisation, on le liquéfie, on le stocke et on le renvoie à l'état liquide dans la zone de polymérisation, (c) qu'on règle la température dans la zone de polymérisation au moyen d'une mesure continue de la température et d'une modification, alors déclenchée en cas de variation de la température, de la quantité introduite par unité de temps de propylène liquide qui se vaporise dans la zone de réaction, (d) qu'on remplace le propylène consommé par polymérisation par apport de propylène frais, et (e) qu'on utilise un système catalytique de Ziegler-Natta qui comporte, pour 100 parties en moles — calculées en tant qui titane — d'un composant de catalyseur (1) contenant du titane, de 200 à 1500 parties en moles — calculées en tant qu'aluminium — d'un composant de catalyseur (2) contenant de l'aluminium,

(1) le composant de catalyseur contenant du titane étant un complexe qui a été obtenu à partir (1.1) de 100 parties en moles d'une substance de formule $TiCl_3 . 0,33 AlCl_3$ et (1.2) de 5 à 50 parties en moles d'une substance de formule $R_3PO_n$ — dans laquelle R est mis pour un groupement n-butyle, i-butyle ou phényle et n pour le nombre 0 ou 1 — par broyage à sec sans adjuvants ou additifs, et

(2) le composant de catalyseur contenant de l'aluminium étant du triéthylaluminium, caractérisé en ce qu'on utilise un système catalytique de Ziegler-Natta qui contient comme autre composant, pour 100 parties en moles — calculées en tant qu'aluminium — du composant de catalyseur (2) contenant de l'aluminium,

(3) de 3 à 30 parties en moles d'un alcoxysilane de formule $R^1OSiR^2R^3R^4$ — dans laquelle $R^1$ est mis pour un groupement alkyle ne renfermant pas plus de 8 atomes de carbone, $R^2$, $R^3$ et $R^4$ pour des restes $R^5$ ou $OR^5$ identiques ou différents et $R^5$ pour un reste $R^1$ ou pour le groupement phényle.

**Claim**

A process for preparing a propylene homopolymer by polymerizing propylene by means of a Ziegler-Natta catalyst system at 40—150°C and 10—50 bar in the gas phase in a centric stirred bed of finely divided polymer by removing the heat of polymerization by evaporative cooling and by introducing the propylene into the polymerization zone continuously or progressively and removing the polymer from the polymerization zone continuously or progressively, with the provisos that (a) the pressure and the temperature are maintained in the polymerization zone within a range which corresponds to the gaseous state of the propylene, (b) gaseous propylene not consumed by polymerization is removed from the polymerization zone, liquefied, stored and reintroduced in liquid form into the polymerization zone, (c) the temperature in the polymerization zone is controlled by continuous measurement of the temperature and, if the temperature is found to have changed, a consequent change in the amount of liquid propylene introduced and evaporated in the reaction zone per unit time, (d) the propylene consumed by polymerization is replaced by the addition of fresh propylene, and (e) the Ziegler-Natta catalyst system used exhibits per 100 mol parts — calculated as titanium — of a titanium-containing catalyst component (1) from 200 to 1500 mol parts — calculated as aluminium — of an aluminium-containing catalyst component (2), where

(1) the titanium-containing catalyst component is a complex obtained from (1.1) 100 mol parts of a substance of the formula $TiCl_3 . 0.33 AlCl_3$ and (1.2) from 5 to 50 mol parts of a substance of the formula $R_3PO_n$, where R is n-butyl, i-butyl or phenyl and n is 0 or 1, by dry grinding without auxiliaries or additives, and

(2) the aluminum-containing catalyst component is triethylaluminum,

wherein the Ziegler-Natta catalyst system used contains per 100 mol parts — calculated as aluminum — of the aluminum-containing catalyst component (2) as a further component

(3) from 3 to 30 mol parts of an alkoxysilane of the formula $R^1OSiR^2R^3R^4$, where $R^1$ is alkyl of not more than 8 carbon atoms, $R^2$, $R^3$ and $R^4$ are identical or different $R^5$ or $OR^5$, and $R^5$ is $R^1$ or phenyl.